# EUROPÄISCHE PATENTSCHRIFT

(11) **EP 2 982 334 B1**
(45) Veröffentlichungstag und Bekanntmachung des Hinweises auf die Patenterteilung: **01.02.2017**
(21) Anmeldenummer: 14180304.9
(22) Anmeldetag: 08.08.2014
(51) Int. Cl.: A61C 17/20, A61C 1/00, A61C 1/07, A61C 3/03, A61C 1/14

(54) **Kupplungsvorrichtung zur Übertragung einer Antriebsbewegung von einem schwingungsübertragenden Handstück auf ein medizinisches, insbesondere zahnärztliches, Werkzeug**
Coupling device for the transmission of a driving motion from a vibration transmitting handpiece to a medical, in particular dental tool
Dispositif d'accouplement destiné à la transmission d'un mouvement d'entraînement d'une pièce à main transmettant des vibrations à un outil médical, en particulier dentaire

(43) Veröffentlichungstag der Anmeldung: 10.02.2016
(73) Patentinhaber: W & H Dentalwerk Bürmoos GmbH, 5111 Bürmoos (AT)
(72) Erfinder: Eder, Karlheinz, 5152 Michaelbeuern (AT); Brugger, Wilhelm, 5071 Wals-Siezenheim (AT)

(56) Entgegenhaltungen:
- EP-A1- 1 728 483
- EP-A1- 2 160 997
- EP-A2- 0 293 654
- DE-A1-102005 058 879

## Beschreibung

Die vorliegende Erfindung bezieht sich auf eine Kupplungsvorrichtung zur Übertragung einer Antriebsbewegung und gegebenenfalls eines Arbeitsmediums von einem schwingungsübertragenden Handstück auf ein medizinisches, insbesondere zahnärztliches, Werkzeug nach dem Oberbegriff des Anspruchs 1.

Derartige Kupplungsvorrichtungen dienen dazu ein medizinisches Werkzeug, welches insbesondere zum Entfernen von Zahnstein ausgebildet ist, an einem Handstück, welches eine Schwingungsquelle aufweist, zu befestigen. Die Schwingungsquelle ist hierbei bevorzugt als Piezoantrieb ausgebildet und aktiviert das Werkzeug mittels Schall oder Ultraschall.

Eine derartige Kupplungsvorrichtung für ein medizinisches Handstück und Werkzeug ist insbesondere aus der EP 2 160 997 A1 bekannt.

Diese Kupplungsvorrichtung zur lösbaren Verbindung eines Werkzeuges mit einem medizinischen Handstück umfasst ein erstes am Werkzeug vorgesehenes Kupplungselement und ein zweites am Handstück angeordnetes Kupplungselement. Beide Kupplungselemente werden mittels einer Kugel-Laufbahn Verbindung und einer Anlagefläche zur reibschlüssigen Verbindung miteinander verbunden, um einen festen Sitz zu gewährleisten. Nur durch eine feste Verbindung des Werkzeuges mit der Schwingungsquelle kann eine Übertragung der Schwingungsenergie auf das Werkzeug erfolgen. Die Kugel-Laufbahn Verbindung weist hierbei eine im Wesentlichen wendelförmig um die Längssachse der Kupplungsvorrichtung verlaufenden Führungsnut auf, in die ein Führungselement des anderen Kupplungselements eingreift. Die Anlagefläche zur reibschlüssigen Verbindung ist bevorzugt durch eine konische Anlagefläche an dem Werkzeug und einer komplementären Anlagefläche an dem Handstück gebildet. Durch das Verdrehen der beiden Kupplungselemente zueinander wird ein Reibschluss zwischen den beiden Anlageflächen hergestellt.

Eine weitere Kupplungsvorrichtung zur lösbaren Verbindung eines Werkzeugs mit einem Handstück ist beispielsweise aus der EP 293 654 A2 bekannt. Die Patentschrift offenbart einen Scaler für die Zahnreinigung. Zur lösbaren Verbindung eines Schabegeräts mit dem Scaler umfasst dieser eine Lagerhülse, in welcher das Schabegerät in axialer Richtung verschiebbar aufnehmbar ist, sowie mehrere Kupplungskörper, welche wiederum in radialer Richtung verschiebbar gelagert sind. In einer Halteposition sind die Kupplungskörper in Vertiefungen des Werkzeugschaftes blockiert. Durch das Drehen eines Kupplungsrings werden die Kupplungskörper freigegeben, sodass das Schabegerät ausgewechselt werden kann.

Der vorliegenden Erfindung liegt die Aufgabe zugrunde, eine Kupplungsvorrichtung zur Übertragung einer Antriebsbewegung von einem schwingungsübertragenden Handstück auf ein medizinisches Werkzeug zu schaffen, welche bei einer vereinfachten Handhabung es insbesondere ermöglicht, eine fehlerhafte Verbindung zwischen dem Werkzeug und dem Handstück zu vermeiden.

Gemäß einem Ausführungsbeispiel einer Kupplungsvorrichtung zur Übertragung einer Antriebsbewegung und gegebenenfalls eines Arbeitsmediums von einem schwingungsübertragenden Handstück auf ein medizinisches, insbesondere zahnärztliches, Werkzeug mit einem ersten am Handstück und einem zweiten am Werkzeug vorgesehenen Kupplungselement, wobei eines der beiden Kupplungselemente als Kupplungsvorsprung ausgebildet ist, der in eine Kupplungsausnehmung an dem anderen Kupplungselement einsetzbar ist, weist der Kupplungsvorsprung und die Kupplungsausnehmung jeweils einen ersten Abschnitt mit einer Schraubverbindung zur lösbaren Verbindung der beiden Kupplungselemente sowie einen zweiten Abschnitt zur Positionierung der beiden Kupplungselemente zu deren gemeinsamen Drehachse auf, wobei der zweite Abschnitt an dem Kupplungsvorsprung und an der Kupplungsausnehmung derart ausgebildet ist, dass beide Kupplungselemente zueinander geführt und entlang der gemeinsamen Drehachse verschiebbar sind, bevor die beiden Kupplungselemente mittels des ersten Abschnitts lösbar miteinander verbindbar sind, um eine fehlerhafte Verbindung zwischen dem Werkzeug und dem Handstück zu vermeiden.

Gemäß einem ersten Ausführungsbeispiel der Kupplungsvorrichtung ist der erste Abschnitt zur lösbaren Verbindung beider Kupplungselemente durch ein mehrgängiges Gewinde, ausgebildet. Zur Positionierung der beiden Kupplungselemente zueinander weist der zweite Abschnitt bevorzugt eine zylindrische Führungsfläche an dem Kupplungsvorsprung und in der Kupplungsausnehmung auf.

Gemäß einem zweiten Ausführungsbeispiel der Kupplungsvorrichtung ist der erste Abschnitt zur lösbaren Verbindung der beiden Kupplungselemente vor dem zweiten Abschnitt an dem vorderen Ende der Mantelfläche des Kupplungsvorsprungs und an dem hinteren Ende der Mantelfläche der Kupplungsausnehmung angeordnet. Um den ersten Abschnitt des Kupplungsvorsprungs leichter in den korrespondierenden Abschnitt der Kupplungsausnehmung einführen zu können, weist der Kupplungsvorsprung an seinem vorderen Ende eine Fase auf.

Gemäß einem dritten Ausführungsbeispiel der Kupplungsvorrichtung ist der Durchmesser des ersten Abschnitts an dem Kupplungsvorsprung und an der Kupplungsausnehmung kleiner als der Durchmesser des zweiten Abschnitts an dem Kupplungsvorsprung und an der Kupplungsausnehmung. Des Weiteren ist die Länge des ersten Abschnitts an dem Kupplungsvorsprung bevorzugt kleiner als die Länge des zweiten Abschnitts an der Kupplungsausnehmung, so dass beide Kupplungselemente mittels des zweiten Abschnitts zueinander geführt und entlang der gemeinsamen Drehachse verschiebbar sind, bevor die beiden Kupplungselemente mittels des ersten Abschnitts miteinander verbindbar sind. Um den ersten Abschnitt an dem Kupplungsvorsprung, bei der Übertragung der Antriebsbewegung von dem Handstück auf das Werkzeug, zu entlasten, weist der zweite Abschnitt an dem Kupplungsvorsprung bevorzugt eine rillenförmige Vertiefung auf.

Gemäß einem vierten Ausführungsbeispiel der Kupplungsvorrichtung ist zumindest eines der beiden Kupplungselemente zumindest teilweise aus Titan gefertigt. Des Weiteren ist bevorzugt zumindest eines der beiden Kupplungselemente zumindest teilweise mit einer verschleißfesten Beschichtung versehen.

Gemäß allen voranstehenden Ausführungsbeispielen weisen beide Kupplungselemente bevorzugt einen Fluidkanal auf, so dass dem Werkzeug ein Arbeitsmedium zuführbar ist. Des Weiteren weisen beide Kupplungselemente bevorzugt eine Anschlagfläche auf, so dass beide Kupplungselemente in axialer Richtung zur gemeinsamen Drehachse miteinander verspannbar sind.

Zusätzlich ist gemäß allen voranstehenden Ausführungsbeispielen an einem der beiden Kupplungselemente bevorzugt ein Auflagebereich, insbesondere in Form eines Mehrkants, zum Anlegen eines Werkzeugschlüssels vorgesehen.

Gemäß einem Ausführungsbeispiel eines Verfahrens zum lösbaren Verbinden eines medizinischen, insbesondere zahnärztlichen, Werkzeugs mit einem schwingungsübertragenden Handstück mittels einer Kupplungsvorrichtung nach einem der vorherstehenden Ausführungsbeispiele, weist dieses folgende Schritte auf:
- Positionieren der beiden Kupplungselemente zu deren gemeinsamen Drehachse durch das Einführen des Kupplungsvorsprungs in die Kupplungsausnehmung bis der zweite Abschnitt des Kupplungsvorsprungs zumindest teilweise in dem zweiten Abschnitt der Kupplungsausnehmung angeordnet ist,
- Verschieben der beiden Kupplungselemente zueinander und entlang deren gemeinsamen Drehachse bis der erste Abschnitt des Kupplungsvorsprungs zumindest teilweise in den ersten Abschnitt der Kupplungsausnehmung greift,
- Verbinden beider Kupplungselemente mittels der Schraubverbindung an dem ersten Abschnitt des Kupplungsvorsprungs und der Kupplungsausnehmung.

Die vorliegende Kupplungsvorrichtung zeichnet sich durch folgende Vorteile aus.

Durch die Ausbildung eines Abschnitts an beiden Kupplungselementen der Kupplungsvorrichtung, welcher dazu dient beide Kupplungselemente zu deren gemeinsamen Drehachse zu positionieren und beide Kupplungselemente zueinander geführt und entlang der gemeinsamen Drehachse verschiebbar zu lagern, bevor die beiden Kupplungselemente mittels eines weiteren Abschnitts lösbar miteinander verbindbar sind, wird eine fehlerhafte Verbindung zwischen dem Werkzeug und dem Handstück vermieden. Insbesondere wird bei Ausbildung des weiteren Abschnitts als Schraubverbindung mit einem Innen- und Außengewinde durch die gezielte Führung der beiden Kupplungselemente zueinander ein unsachgemäßes Einsetzen des Außengewindes in das Innengewinde vermieden.

Des Weiteren gewährleistet die erfindungsgemäße Kupplungsvorrichtung dem Anwender eine einfache und zeitsparende Befestigung des Werkzeuges mit dem Handstück. Mehrmaliges Ansetzen des ersten Kupplungselements an dem zweiten Kupplungselement, um vorzugsweise ein Außengewinde des einen Kupplungselements in das Innengewinde des zweiten Kupplungselements ordnungsgemäß einzusetzen, ist nicht mehr notwendig.

Im Rahmen der Erfindung versteht es sich selbstverständlich, dass die Kupplungsvorrichtung nicht auf schwingungsübertragende Handstücke mit einer Schwingungsquelle zur Präparation von Oberflächen von Zähnen beschränkt ist. Vielmehr können derartige Kupplungsvorrichtungen auch bei anderen angetriebenen medizinischen Handstücken verwendet werden, wie zum Beispiel bei rotierend angetriebenen Handstücken.

Nachfolgend wird die Erfindung anhand mehrerer Ausführungsbeispiele und in Verbindung mit den beigefügten Zeichnungen erläutert.

Dabei zeigt:
Figur 1 eine medizinische, insbesondere dentale, Behandlungsvorrichtung mit einem schwingungsübertragenden Handstück und einem daran angeschlossenen medizinischen, insbesondere zahnärztlichen, Werkzeug,
Figur 2 eine perspektivische Darstellung der Kupplungsvorrichtung mit einem ersten an einer Antriebsachse des Handstücks und einem zweiten am Werkzeug vorgesehenen Kupplungselement,
Figur 3 einen Querschnitt durch die Antriebsachse des Handstücks mit dem als Kupplungsvorsprung ausgebildeten Kupplungselement der Kupplungsvorrichtung,
Figur 4 einen Querschnitt durch das medizinische Werkzeug mit dem als Kupplungsausnehmung ausgebildeten Kupplungselement der Kupplungsvorrichtung,
Figur 5 eine Detailansicht der Kupplungsvorrichtung, bei der das Werkzeug und das Handstück, insbesondere das erste Kupplungselement mit dem zweiten Kupplungselement, verbunden ist;

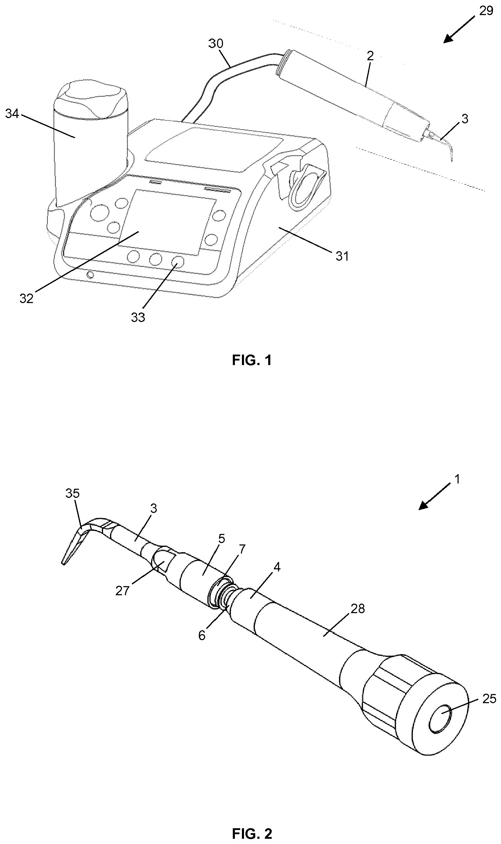

In Figur 1 ist eine medizinische, insbesondere dentale, Behandlungsvorrichtung 29 mit einem schwingungsübertragenden Handstück 2 und einem medizinischen, insbesondere zahnärztlichen, Werkzeug 3 gezeigt. In dem Handstück 2 ist eine Schwingungsquelle angeordnet, welche bevorzugt als Piezoantrieb ausgebildet ist. Das Werkzeug 3 ist hierbei bevorzugt mittels der Kupplungsvorrichtung direkt mit der Antriebsachse des Piezoantriebs lösbar verbunden, so dass das Werkzeug 3 mittels Schall oder Ultraschall aktivierbar ist. Ein Versorgungsschlauch 30 dient dazu das Handstück 2, insbesondere dessen Antrieb, mit der Steuereinheit 31 zu verbinden. Während des Betriebs des Handstücks 2 ist dieses sowie das Werkzeug 3 mit Arbeitsmedien, insbesondere mit elektrischer Energie sowie Spraywasser zur Kühlung des Werkzeugs, zu versorgen. Des Weiteren dient der Versorgungsschlauch 30 insbesondere dazu elektrische Signale und/ oder Daten zwischen der Steuereinheit 31 und dem Handstück 2 zu übertragen. Zur Anzeige und Einstellung der Betriebsparameter für das Handstück 2 sowie für das Werkzeugs 3 weist die Steuereinheit 31 zumindest eine Anzeige 32 sowie zumindest ein Betätigungselement 33 auf. Ein an die Steuereinheit 31 anschließbare Behälter 34 dient als Fluidquelle für das Spraywasser zur Kühlung des Handstücks 2 und/ oder des Werkzeugs.

Die Figur 2 zeigt die erfindungsgemäße Kupplungsvorrichtung 1 mit einem ersten an einer Antriebsachse 28 des Handstücks 2 und einem zweiten am Werkzeug 3 vorgesehenen Kupplungselement 4, 5. Das gezeigte Werkzeug 2 zur Oberflächenbehandlung von Zähnen umfasst einen Werkzeugschaft, an welchen ein Arbeitskopf 35 angebracht ist. Der Arbeitskopf 35 kann unterschiedlichste Formen aufweisen. Auf dem gegenüberliegenden Ende des Schaftes ist das Kupplungselement 5 angeordnet, um das Werkzeug 3 lösbar an dem anderen Kupplungselement 4, welches bevorzugt mit der Antriebsachse 28 des Handstücks 2 verbunden ist, zu befestigen. Das Kupplungselement 4 an der Antriebsachse 28 ist hierbei bevorzugt als Kupplungsvorsprung 6 ausgebildet, welcher in eine Kupplungsausnehmung 6 des anderen Kupplungselements 5 einsetzbar ist. Um das Werkzeug 3 fest an der Antriebsachse 28 zu befestigen, weist das Werkzeug 3 in diesem Ausführungsbeispiel einen Auflagebereich 27 auf, welcher bevorzugt in Form eines Mehrkants ausgebildet ist. Mittels eines Werzeugschlüssels kann so das Werkzeug 3 fest mit der Achse 28 verbunden werden. Eine zentrale Bohrung 25 durch die Antriebsachse 28 und durch die Kupplungsvorrichtung 1, dient als Fluidkanal zur Übertragung von Spraywasser, insbesondere zur Werkzeuginnenkühlung.

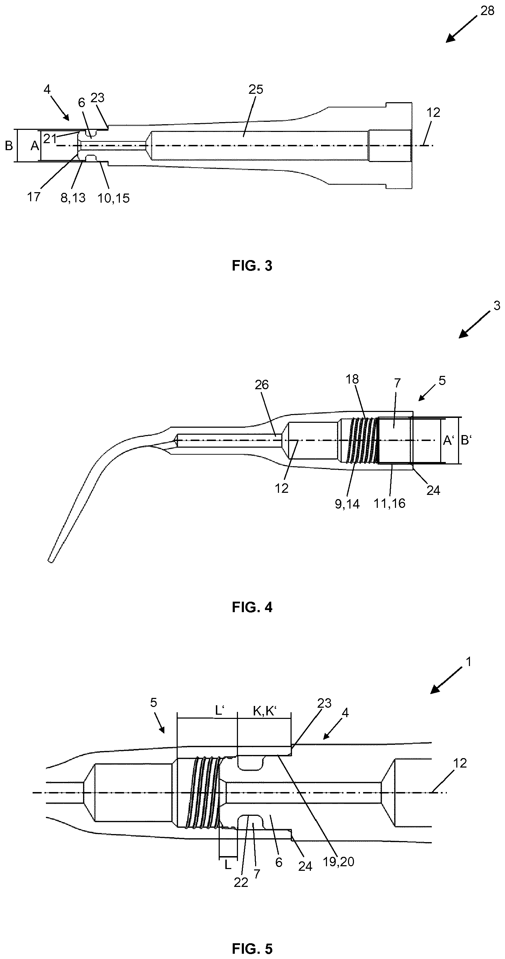

In Figur 3 ist die Antriebsachse 28 des Handstücks 2 mit dem als Kupplungsvorsprung 6 ausgebildeten Kupplungselement 4 der Kupplungsvorrichtung 1 abgebildet. Der erste Abschnitt 8 an dem Kupplungsvorsprung 6 zur lösbaren Verbindung beider Kupplungselemente 4, 5 ist in diesem Ausführungsbeispiel durch eine Schraubverbindung 13 ausgebildet, welche bevorzugt ein mehrgängiges Gewinde umfasst. Die Antriebsachse 28 mit dem Kupplungselement 4 ist bevorzugt aus Titan gefertigt und weist zumindest im Bereich der Schraubverbindung eine verschleißfeste Beschichtung auf. Der zweite Abschnitt 10 zur Positionierung der beiden Kupplungselemente 4, 5 zueinander ist durch eine zylindrische Führungsfläche 15 an dem Kupplungsvorsprung 6, welche sich entlang der Drehachse 12 erstreckt, gebildet. Der erste Abschnitt 8 ist hierbei vor dem zweiten Abschnitt 10 an dem vorderen Ende 17 des Kupplungsvorsprungs 6 angeordnet. Um den ersten Abschnitt 8 des Kupplungsvorsprungs 6 leichter in den korrespondierenden Abschnitt 9 der Kupplungsausnehmung 7 einführen zu können, weist der Kupplungsvorsprung 6 an seinem vorderen Ende 17 eine Fase 21 auf. Damit beide Kupplungselemente 4, 5 mittels des zweiten Abschnitts 10 zueinander geführt und entlang der gemeinsamen Drehachse 12 verschiebbar sind, bevor die beiden Kupplungselemente 4, 5 mittels des ersten Abschnitts 8 miteinander verbindbar sind, ist der Durchmesser A des ersten Abschnitts 8 an dem Kupplungsvorsprung 6 kleiner als der Durchmesser B des zweiten Abschnitts 10 ausgebildet.

An der Basisfläche der Antriebsachse 28, von der sich der Kupplungsvorsprung 6 erstreckt, weist das Kupplungselement 4 eine Anschlagfläche 23 auf. Die Anschlagfläche 23 erstreckt sich hierbei bevorzugt in radialer Richtung um den Kupplungsvorsprung 6. Auch die Anschlagflächen 23 ist bevorzugt mit einer verschleißfesten Beschichtung versehen. Das korrespondierende Kupplungselement 5 an dem Werkzeug 3 weist ebenfalls eine Anschlagfläche 24 auf, so dass beide Kupplungselemente 4, 5 mittels des ersten Abschnitt 8, 9, insbesondere mittels der Schraubverbindung 13, 14, in axialer Richtung zur gemeinsamen Drehachse 12 miteinander verspannbar sind.

Der Fluidkanal 25 in der Antriebsachse 28 erstreckt in diesem Ausführungsbeispiel entlang der gemeinsamen Drehachse 12 durch das Kupplungselement 4, insbesondere durch den Kupplungsvorsprung 6 mit dem ersten und zweiten Abschnitt 8, 10 bis zu dem freien Ende 17 des Kupplungsvorsprungs 6.

Figur 4 zeigt das medizinische Werkzeug 3 mit dem als Kupplungsausnehmung 7 ausgebildeten Kupplungselement 5 der Kupplungsvorrichtung 1. Der erste Abschnitt 9 zur lösbaren Verbindung beider Kupplungselemente 4, 5 ist durch eine Schraubverbindung 14 mit einem Innengewinde ausgebildet, welches mit dem Außengewinde 13 an dem Kupplungsvorsprung 6 verbindbar ist. Der erste Abschnitt 9 ist hierbei an dem hinteren Ende 18 der Kupplungsausnehmung 7 angeordnet. Der zweite Abschnitt 11 in der Kupplungsausnehmung 7 zur Positionierung der beiden Kupplungselemente 4, 5 zueinander ist ebenfalls durch eine zylindrische Führungsfläche 16 gebildet, welche sich in axialer Richtung zur gemeinsamen Drehachse 12 erstreckt. Zur Aufnahme des in Figur 3 gezeigten Kupplungsvorsprungs 6 in der Kupplungsausnehmung 7 ist auch der Durchmesser A' des ersten Abschnitts 9 kleiner als der Durchmesser B' des zweiten Abschnitts 11 ausgebildet. Beide Kupplungselemente 4, 5 sind so mittels des zweiten Abschnitts 10, 11 zueinander geführt ineinander verschiebbar, bevor diese mittels des ersten Abschnitts 8, 9 und der Anschlagflächen 23, 24 miteinander verspannbar sind. Der Fluidkanal 26 in dem Werkzeug 3 ist mittels der Kupplungsvorrichtung 1 mit dem Fluidkanal 25 der Antriebsachse verbindbar.

In Figur 5 ist eine Detailansicht der Kupplungsvorrichtung 1 abgebildet, bei der das Werkzeug 3 und das Handstück 2, insbesondere das erste Kupplungselement 4 mit dem zweiten Kupplungselement 5, fest verbunden ist. Diese feste und lösbare Verbindung wird dadurch erreicht, dass beide Kupplungselemente 4, 5 zunächst zu deren gemeinsamen Drehachse 12 positioniert werden, in dem der Kupplungsvorsprung 6 mit der Mantelfläche 19 in die Kupplungsausnehmung 7 mit der Mantelfläche 20 eingeführt wird bis der zweite Abschnitt 10 des Kupplungsvorsprungs 6 zumindest teilweise in dem zweiten Abschnitt 11 der Kupplungsausnehmung 7 angeordnet ist. Anschließend werden beide Kupplungselemente 4, 5 zueinander geführt und entlang der gemeinsamen Drehachse 12 verschoben, bis der erste Abschnitt 8 des Kupplungsvorsprungs 6 zumindest teilweise in den ersten Abschnitt 9 der Kupplungsausnehmung 7 greift. Schließlich werden beide Kupplungselemente 4, 5 mittels der Schraubverbindung an dem ersten Abschnitts 8, 9 miteinander verschraubt und mittels der Anschlagflächen 23, 24 fest gegeneinander verspannt.

Eine Einschnürung 22 in der Mantelfläche 19 des Kupplungsvorsprung 6 dient dazu, bei der Übertragung einer Antriebsbewegung von dem Handstück 2 auf das Werkzeug 3, den ersten Abschnitt 8 an dem Kupplungsvorsprung 6, insbesondere die Schraubverbindung mit dem Innen- und Außengewinde, zu entlasten.

Die Längen L, L' und K, K' des ersten Abschnitts 8, 9 und des zweiten Abschnitts 10, 11 an dem Kupplungsvorsprung 6 und der Kupplungsausnehmung 7 sind hierbei derart gewählt, dass beide Kupplungselemente 4, 5 zueinander geführt und entlang der gemeinsamen Drehachse 12 verschiebbar sind, bevor die diese mittels des ersten Abschnitts 8, 9 lösbar miteinander verbindbar sind. Hierzu ist insbesondere die Länge L des ersten Abschnitts 8 an dem Kupplungsvorsprung 6 kleiner als die Länge K' des zweiten Abschnitts 11 in der Kupplungsausnehmung 7, so dass der zweite Abschnitt 10 des Kupplungsvorsprung 6 in die Kupplungsausnehmung 7 greift, bevor der erste Abschnitt 8 des Kupplungsvorsprungs 6 in den ersten Abschnitt 9 der Kupplungsausnehmung einführbar ist. Die Länge K des zweiten Abschnitts 10 an dem Kupplungsvorsprung 6 sowie die Länge K' des zweiten Abschnitts 11 an der Kupplungsausnehmung 7 sind hierbei möglichst groß gewählt, so dass auf Grund der Überlappung der beiden Abschnitte 10, 11 eine exakte Positionierung und Führung der beiden Kupplungselemente 4, 5 zueinander erfolgen kann.

## Patentansprüche

1. Kupplungsvorrichtung (1) zur Übertragung einer Antriebsbewegung und gegebenenfalls eines Arbeitsmediums von einem schwingungsübertragenden Handstück (2) auf ein medizinisches, insbesondere zahnärztliches, Werkzeug (3) mit einem ersten am Handstück (1) und einem zweiten am Werkzeug (3) vorgesehenen Kupplungselement (4, 5), wobei eines der beiden Kupplungselemente als Kupplungsvorsprung (6) ausgebildet ist, der in eine Kupplungsausnehmung (7) an dem anderen Kupplungselement einsetzbar ist, wobei der Kupplungsvorsprung (6) und die Kupplungsausnehmung (7) jeweils einen ersten Abschnitt (8, 9) mit einer Schraubverbindung (13, 14) zur lösbaren Verbindung der beiden Kupplungselemente (4, 5) sowie einen zweiten Abschnitt (10, 11) zur Positionierung der beiden Kupplungselemente zu deren gemeinsamen Drehachse (12) aufweist, wobei der zweite Abschnitt (10, 11) an dem Kupplungsvorsprung (6) und an der Kupplungsausnehmung (7) derart ausgebildet ist, dass beide Kupplungselemente (4, 5) zueinander geführt und entlang der gemeinsamen Drehachse (12) verschiebbar sind, bevor die beiden Kupplungselemente (4, 5) mittels des ersten Abschnitts (8, 9) lösbar miteinander verbindbar sind, um eine fehlerhafte Verbindung zwischen dem Werkzeug (3) und dem Handstück (2) zu vermeiden.

2. Kupplungsvorrichtung (1) nach Anspruch 1, **dadurch gekennzeichnet, dass** die Schraubverbindung (13, 14) ein mehrgängiges Gewinde umfasst.

3. Kupplungsvorrichtung (1) nach einem der vorherigen Ansprüche, **dadurch gekennzeichnet, dass** der zweite Abschnitt (10, 11) zur Positionierung der beiden Kupplungselemente zueinander durch eine zylindrische Führungsfläche (15, 16) an dem Kupplungsvorsprung (6) und in der Kupplungsausnehmung (7) gebildet ist.

4. Kupplungsvorrichtung (1) nach einem der vorherigen Ansprüche, **dadurch gekennzeichnet, dass** der erste Abschnitt (8, 9) zur lösbaren Verbindung der beiden Kupplungselemente (4, 5) vor dem zweiten Abschnitt (10, 11) an dem vorderen Ende (17) der Mantelfläche (19) des Kupplungsvorsprungs (6) und an dem hinteren Ende (18) der Mantelfläche (20) der Kupplungsausnehmung (7) angeordnet ist.

5. Kupplungsvorrichtung (1) nach einem der vorherigen Ansprüche, **dadurch gekennzeichnet, dass** der Kupplungsvorsprung (6) an seinem vorderen Ende (17) eine Fase (21) aufweist, so dass der erste Abschnitt (8) des Kupplungsvorsprungs (6) leichter in den korrespondierenden Abschnitt (9) der Kupplungsausnehmung (7) einführbar ist.

6. Kupplungsvorrichtung (1) nach einem der vorherigen Ansprüche, **dadurch gekennzeichnet, dass** der Durchmesser (A, A') des ersten Abschnitts (8, 9) an dem Kupplungsvorsprung (6) und an der Kupplungsausnehmung (7) kleiner als der Durchmesser (B, B') des zweiten Abschnitts (10, 11) ist und/ oder die Länge (L) des ersten Abschnitts (8) an dem Kupplungsvorsprung (6) kleiner als die Länge (K') des zweiten Abschnitts (11) an der Kupplungsausnehmung (7) ist, so dass beide Kupplungselemente (4, 5) mittels des zweiten Abschnitts (10,11) zueinander geführt und entlang der gemeinsamen Drehachse (12) verschiebbar sind, bevor die beiden Kupplungselemente (4, 5) mittels des ersten Abschnitts (8, 9) miteinander verbindbar sind.

7. Kupplungsvorrichtung (1) nach einem der vorherigen Ansprüche, **dadurch gekennzeichnet, dass** der zweite Abschnitt (10) an dem Kupplungsvorsprung (6) eine umlaufende Einschnürung (22) aufweist, um den ersten Abschnitt (8) an dem Kupplungsvorsprung (6) bei der Übertragung einer Antriebsbewegung zu entlasten.

8. Kupplungsvorrichtung (1) nach einem der vorherigen Ansprüche, **dadurch gekennzeichnet, dass** beide Kupplungselemente (4, 5) eine Anschlagfläche (23, 24) aufweisen, so dass beide Kupplungselemente (4, 5) in axialer Richtung zur gemeinsamen Drehachse (12) miteinander verspannbar sind.

9. Kupplungsvorrichtung (1) nach einem der vorherigen Ansprüche, **dadurch gekennzeichnet, dass** beide Kupplungselemente ( 4, 5) einen Fluidkanal (25, 26) aufweisen, so dass dem Werkzeug (3) ein Arbeitsmedium zuführbar ist.

10. Kupplungsvorrichtung (1) nach einem der vorherigen Ansprüche, **dadurch gekennzeichnet, dass** zumindest eines der beiden Kupplungselemente (4, 5) einen Auflagebereich (27), insbesondere in Form eines Mehrkants, zum Anlegen eines Werkzeugschlüssels aufweist.

11. Kupplungsvorrichtung (1) nach einem der vorherigen Ansprüche, **dadurch gekennzeichnet, dass** zumindest eines der beiden Kupplungselemente (4, 5) zumindest teilweise aus Titan gefertigt ist.

12. Kupplungsvorrichtung (1) nach einem der vorherigen Ansprüche, **dadurch gekennzeichnet, dass** zumindest eines der beiden Kupplungselemente (4, 5) zumindest teilweise mit einer verschleißfesten Beschichtung versehen ist.

13. Kupplungsvorrichtung (1) nach einem der vorherigen Ansprüche, **dadurch gekennzeichnet, dass** zumindest eines der beiden Kupplungselemente (4 , 5) mit einer in Schwingung versetzbaren Antriebsachse (28) eines medizinischen Handstückes (2) verbindbar oder verbunden ist.

14. Verfahren zum lösbaren Verbinden eines medizinischen, insbesondere zahnärztlichen, Werkzeugs (3) mit einem schwingungsübertragenden Handstück (2) mittels einer Kupplungsvorrichtung (1) nach einem der vorherstehenden Ansprüche **gekennzeichnet durch** die Schritte:
- Positionieren der beiden Kupplungselemente (4, 5) zu deren gemeinsamen Drehachse (12) **durch** das Einführen des Kupplungsvorsprungs (6) in die Kupplungsausnehmung (7) bis der zweite Abschnitt (10) des Kupplungsvorsprungs (6) zumindest teilweise in dem zweiten Abschnitt (11) der Kupplungsausnehmung (7) angeordnet ist,
- Verschieben der beiden Kupplungselemente (4, 5) zueinander und entlang deren gemeinsamen Drehachse (12) bis der erste Abschnitt (8) des Kupplungsvorsprungs (6) zumindest teilweise in den ersten Abschnitt (9) der Kupplungsausnehmung (7) greift,
- Verbinden beider Kupplungselemente (4, 5) mittels der Schraubverbindung (13, 14) an dem ersten Abschnitt (8, 9) des Kupplungsvorsprungs (6) und der Kupplungsausnehmung (7).

## Claims

1. A coupling device (1) for transferring a driving motion and optionally a working medium from a vibration transferring handpiece (2) to a medical, in particular dental, tool (3) with a first coupling element (4), which is provided on the handpiece (2), and a second coupling element (5), which is provided on the tool (3), wherein one of the two coupling elements is designed as a coupling protrusion (6), which can be inserted into a coupling recess (7) on the other coupling element, wherein the coupling protrusion (6) and the coupling recess (7) each have a first section (8, 9) with a screw connection (13, 14) for releasable connection of the two coupling elements (4, 5) and a second section (10, 11) for positioning the two coupling elements relative to their joint axis of rotation (12), wherein the second section (10, 11) on the coupling protrusion (6) and on the coupling recess (7) is designed such, that the two coupling elements (4, 5) are guided relative to one another and can be displaced along the joint axis of rotation (12) before the two coupling elements (4, 5) can be releasably connected to one another by means of the first section (8, 9) to prevent a faulty connection between the tool (3) and the handpiece (2).

2. The coupling device (1) according to claim 1, **characterized in that** the screw connection (13, 14) comprises a multi-start thread.

3. The coupling device (1) according to any one of the preceding claims, **characterized in that**
the second section (10, 11) for positioning the two coupling elements relative to one another is formed by a cylindrical guide surface (15, 16) on the coupling protrusion (6) and in the coupling recess (7).

4. The coupling device (1) according to any one of the preceding claims, **characterized in that**
the first section (8, 9) for releasable connection of the two coupling elements (4, 5) is arranged in front of the second section (10, 11) on the forward end (17) of the lateral surface (19) of the coupling protrusion (6) and on the rear end (18) of the lateral surface (20) of the coupling recess (7).

5. The coupling device (1) according to any one of the preceding claims, **characterized in that**
the coupling protrusion (6) has on its forward end (17) a chamfer (21) so that the first section (8) of the coupling protrusion (6) can be inserted more easily into the corresponding section (9) of the coupling recess (7).

6. The coupling device (1) according to any one of the preceding claims, **characterized in that**
the diameter (A, A') of the first section (8, 9) on the coupling protrusion (6) and on the coupling recess (7) is smaller than the diameter (B, B') of the second section (10, 11) and/ or the length (L) of the first section (8) on the coupling protrusion (6) is smaller than the length (K') of the second section (11) on the coupling recess (7), so that the two coupling elements (4, 5) are guided relative to one another and can be displaced along the joint axis of rotation (12) by means of the second section (10, 11) before the two coupling elements (4, 5) can be joined to one another by means of the first section (8, 9).

7. The coupling device (1) according to any one of the preceding claims, **characterized in that**
the second section (10) on the coupling protrusion (6) comprises a peripheral constriction (22) to relieve the first section (8) on the coupling protrusion (6) in the transfer of a driving movement.

8. The coupling device (1) according to any one of the preceding claims, **characterized in that**
the two coupling elements (4, 5) each have a stop surface (23, 24), so that the two coupling elements (4, 5) can be braced against one another in an axial direction relative to the joint axis of rotation (12).

9. The coupling device (1) according to any one of the preceding claims, **characterized in that**
the two coupling elements (4, 5) each comprise a fluid channel (25, 26), so that a working medium can be supplied to the tool (3).

10. The coupling device (1) according to any one of the preceding claims, **characterized in that**
at least one of the two coupling elements (4, 5) has a supporting region (27), in particular in the form of a polygon, for applying a tool wrench.

11. The coupling device (1) according to any one of the preceding claims, **characterized in that**
at least one of the two coupling elements (4, 5) is made at least in part of titanium.

12. The coupling device (1) according to any one of the preceding claims, **characterized in that**
at least one of the two coupling elements (4, 5) is provided at least in part with a wear-resistant coating.

13. The coupling device (1) according to any one of the preceding claims, **characterized in that**
at least one of the two coupling elements (4, 5) can be or is connected to a vibrating axle (28) of a medical handpiece (2).

14. A method for releasable connection of a medical, in particular dental, tool (3) to a vibration transferring handpiece (2) by means of a coupling device (1) according to any one of the preceding claims, **characterized by** the steps:
- positioning the two coupling elements (4, 5) relative to their joint axis of rotation (12) by inserting the coupling protrusion (6) into the coupling recess (7) until the second section (10) of the coupling protrusion (6) is arranged at least partially inside the second section (11) of the coupling recess (7),
- displacing the two coupling elements (4, 5) relative to one another and along their joint axis of rotation (12) until the first section (8) of the coupling protrusion (6) engages at least partially the first section (9) of the coupling recess (7),
- connecting the two coupling elements (4, 5) by means of the screw connection (13, 14) on the first section (8, 9) of the coupling protrusion (6) and the coupling recess (7).

## Revendications

1. Dispositif d'accouplement (1) pour le transfert d'un mouvement d'entraînement et éventuellement d'un milieu opératoire d'une pièce à main transférant des vibrations (2) à un outil médical, en particulier dentaire (3), comprenant un premier élément d'accouplement (4, 5) prévu au niveau de la pièce à main (1) et un second élément d'accouplement (4, 5) au niveau de l'outil (3), un des deux éléments d'accouplement étant réalisé sous forme d'une saillie d'accouplement (6) qui est insérable dans un évidement d'accouplement (7) au niveau de l'autre élément d'accouplement, la saillie d'accouplement (6) et l'évidement d'accouplement (7) présentant respectivement une première section (8, 9) dotée d'un raccord vissé (13, 14) pour le raccordement dissociable des deux éléments d'accouplement (4, 5) ainsi qu'une seconde section (10, 11) pour le positionnement des deux éléments d'accouplement par rapport à leur axe de rotation commun (12), la seconde section (10, 11) au niveau de la saillie d'accouplement (6) et de l'évidement d'accouplement (7) étant réalisée de manière à ce que les deux éléments d'accouplement (4, 5) soient guidés l'un par rapport à l'autre et déplaçables le long de l'axe de rotation commun (12) avant que les deux éléments d'accouplement (4, 5) puissent être reliés entre eux de manière dissociable au moyen de la première section (8, 9) afin d'éviter un raccordement défectueux entre l'outil (3) et la pièce à main (2).

2. Dispositif d'accouplement (1) selon la revendication 1, **caractérisé en ce que** le raccord vissé (13, 14) comprend un filet à pas multiple.

3. Dispositif d'accouplement (1) selon une des revendications précédentes, **caractérisé en ce que**
la seconde section (10, 11) de positionnement des deux éléments d'accouplement l'un par rapport à l'autre est constituée par une surface de guidage cylindrique (15, 16) au niveau de la saillie d'accouplement (6) et de l'évidement d'accouplement (7).

4. Dispositif d'accouplement (1) selon une des revendications précédentes, **caractérisé en ce que**
la première section (8, 9) pour le raccordement dissociable des éléments d'accouplement (4, 5) est disposée en amont de la seconde section (10, 11) à l'extrémité avant (17) de la section d'enveloppe (19) de la saillie d'accouplement (6) et à l'extrémité arrière (18) de la surface d'enveloppe (20) de l'évidement d'accouplement (7).

5. Dispositif d'accouplement (1) selon une des revendications précédentes, **caractérisé en ce que**
la saillie d'accouplement (6) présente à son extrémité avant (17) un chanfrein (21), de sorte que la première section (8) de la saillie d'accouplement (6) peut être introduite plus facilement dans la section correspondante (9) de l'évidement d'accouplement (7).

6. Dispositif d'accouplement (1) selon une des revendications précédentes, **caractérisé en ce que**
le diamètre (A, A') de la première section (8, 9) au niveau de la saillie d'accouplement (6) et de l'évidement d'accouplement (7) est inférieur au diamètre (B, B') de la seconde section (10, 11) et/ou que la longueur (L) de la première section (8) au niveau de la saillie d'accouplement (6) est inférieure à la longueur (K') de la seconde section (11) au niveau de l'évidement d'accouplement (7), de sorte que les deux éléments d'accouplement (4, 5) sont guidés l'un par rapport à l'autre au moyen de la seconde section (10,11) et sont déplaçables le long de l'axe de rotation commun (12) avant que les deux éléments d'accouplement (4, 5) puissent être raccordés entre eux au moyen de la première section (8, 9).

7. Dispositif d'accouplement (1) selon une des revendications précédentes, **caractérisé en ce que**
la seconde section (10) au niveau de la saillie d'accouplement (6) présente un étranglement périphérique (22) afin de délester la première section (8) au niveau de la saillie d'accouplement (6) lors du transfert d'un mouvement d'entraînement.

8. Dispositif d'accouplement (1) selon une des revendications précédentes, **caractérisé en ce que**
les deux éléments d'accouplement (4, 5) présentent une surface de butée (23, 24), de sorte que les deux éléments d'accouplement (4, 5) peuvent être serrés ensemble dans le sens axial par rapport à l'axe de rotation commun (12).

9. Dispositif d'accouplement (1) selon une des revendications précédentes, **caractérisé en ce que**
les deux éléments d'accouplement (4, 5) présentent un canal à fluide (25, 26) de sorte qu'un milieu opératoire peut être acheminé vers l'outil (3).

10. Dispositif d'accouplement (1) selon une des revendications précédentes, **caractérisé en ce**
**qu'**au moins un des deux éléments d'accouplement (4, 5) présente une zone d'appui (27), en particulier sous la forme d'un polygone, pour poser une clé d'outil.

11. Dispositif d'accouplement (1) selon une des revendications précédentes, **caractérisé en ce**
**qu'**au moins un des deux éléments d'accouplement (4, 5) est fabriqué au moins partiellement en titane.

12. Dispositif d'accouplement (1) selon une des revendications précédentes, **caractérisé en ce**
**qu'**au moins un des deux éléments d'accouplement (4, 5) est pourvu au moins partiellement d'un revêtement résistant à l'usure.

13. Dispositif d'accouplement (1) selon une des revendications précédentes, **caractérisé en ce**
**qu'**au moins un des deux éléments d'accouplement (4, 5) peut être raccordé ou est raccordé à un axe d'entraînement (28) pouvant être mis en vibration d'une pièce à main médicale (2).

14. Procédé de raccordement dissociable d'un outil médical, en particulier dentaire (3), à une pièce à main transférant des vibrations (2) au moyen d'un dispositif d'accouplement (1) selon une des revendications précédentes, **caractérisé par** les étapes suivantes:
- positionnement des deux éléments d'accouplement (4, 5) par rapport à leur axe de rotation commun (12) par introduction de la saillie d'accouplement (6) dans l'évidement d'accouplement (7) jusqu'à ce que la seconde section (10) de la saillie d'accouplement (6) soit disposée du moins partiellement dans la seconde section (11) de l'évidement d'accouplement (7),
- déplacement des deux éléments d'accouplement (4, 5) l'un vers l'autre et le long de leur axe de rotation commun (12) jusqu'à ce que la première section (8) de la saillie d'accouplement (6) s'engrène au moins partiellement dans la première section (9) de l'évidement d'accouplement (7),
- raccordement des deux éléments d'accouplement (4, 5) au moyen du raccord vissé (13, 14) au niveau de la première section (8, 9) de la saillie d'accouplement (6) et de l'évidement d'accouplement (7).
